# FASCICULE DE BREVET EUROPEEN

(11) **EP 0 936 127 B1**
(45) Date de publication et mention de la délivrance du brevet: **25.09.2002**
(21) Numéro de dépôt: 98403152.6
(22) Date de dépôt: 14.12.1998
(51) Int. Cl.: B62D 1/10, F16D 1/108

(54) **Volant de direction pour véhicule**
Fahrzeuglenkrad
Steering wheel for a vehicle

(30) Priorité: 17.02.1998 FR 9801884
(43) Date de publication de la demande: 18.08.1999
(73) Titulaire: Autoliv-Isodelta, 86190 Chire-en-Montreuil (FR)
(72) Inventeur: Valentin, Jacques, 86190 Chire en Montreuil (FR); Chapelain Etienne, 86440 Migne-Auxances (FR)
(74) Mandataire: Rinuy, Santarelli

(56) Documents cités:
- EP-A- 0 776 811
- WO-A-96/38326

## Description

L'invention a trait aux systèmes de direction pour véhicules, du type décrit dans EP 0 776 811

On a déjà proposé d'assembler la partie terminale de la colonne de direction et le moyeu du volant par encliquetage.

L'invention vise à rendre plus performant ce type d'assemblage.

Elle propose à cet effet un volant de direction pour véhicule, comportant un moyen d'encliquetage, et un moyen élastique sollicitant ledit moyen d'encliquetage, caractérisé en ce qu'il comporte aussi une bague de déverrouillage, ladite bague de déverrouillage, admettant :
- une position de déverrouillage dans laquelle elle entraîne suffisamment ledit moyen d'encliquetage à l'encontre dudit moyen élastique pour libérer un espace au moins égal à l'encombrement radial maximum d'un embout d'encliquetage d'une colonne de direction avec laquelle ledit volant est adapté à coopérer; et
- une position de verrouillage dans laquelle ladite bague n'agit pas sur ledit moyen d'encliquetage.

Du fait de sa forme circulaire, comme celle du moyeu du volant, la bague de déverrouillage peut aisément être guidée par le moyeu pour la faire passer de la position de déverrouillage à la position de verrouillage, et inversement, par rotation de la bague coaxialement au moyeu.

La présence d'une telle bague directement dans le moyeu du volant est particulièrement avantageuse, le déverrouillage du volant pouvant s'effectuer par simple manoeuvre de la bague de déverrouillage, et non par une manipulation complexe nécessitant de faire pénétrer dans le moyeu un outil qui atteint directement le moyen d'encliquetage.

De préférence, un moyen de rappel élastique sollicite ladite bague de déverrouillage vers ladite position de verrouillage.

Ce moyen de rappel évite que la bague de déverrouillage reste bloquée dans la position de déverrouillage, ce qui présente un danger certain puisqu'un opérateur pourrait croire que le volant est fixé sur la colonne alors qu'en réalité le blocage de la bague dans la position de déverrouillage permet l'extraction du volant.

Selon une autre caractéristique préférée, notamment pour des raisons d'encombrement et de commodité de réalisation, ladite bague de déverrouillage comporte un levier de manoeuvre mobile dans un évidement latéral du moyeu dudit volant.

Dans un premier mode de réalisation, ledit levier comporte un orifice de réception d'un outil de manoeuvre.

Dans un deuxième mode de réalisation, ledit levier est adapté à être inséré dans un creux d'extrémité d'un outil de manoeuvre.

Selon des caractéristiques préférées de ce deuxième mode de réalisation, le volant comporte un moyen de blocage pour bloquer dans ladite position de déverrouillage ledit outil engagé sur ledit levier, ledit moyen de blocage étant adapté à ne pas entrer en contact avec ledit levier, un moyen de rappel élastique étant prévu pour ramener ladite bague de déverrouillage dans ladite position de verrouillage.

La présence du moyen de blocage permet à l'opérateur qui veut extraire le volant de la colonne de direction de disposer de ses deux mains pour réaliser la manoeuvre d'extraction, le fait que le moyen de blocage ne peut pas entrer en contact avec le levier évitant le maintien accidentel de la bague en position de déverrouillage.

L'exposé de l'invention sera maintenant poursuivi par la description d'exemples préférés de réalisation, donnée ci-après à titre illustratif et non limitatif, en référence aux dessins annexés. Sur ceux-ci :
la figure 1 est une vue en plan, prise de dessus, d'une colonne de direction et du moyeu d'un volant conformes à l'invention, le chapeau de fermeture et le ressort que comporte le moyeu n'étant pas représentés pour la clarté du dessin ;
- la figure 2 est une vue en élévation-coupe de ce moyeu, prise comme indiqué par II-II sur la figure 1 ;
- les figures 3 et 4 sont des vues similaires montrant respectivement le moyeu en cours d'enfoncement sur la partie terminale de la colonne de direction et montrant le moyeu en position de fixation sur cette colonne ;
- la figure 5 est une autre vue similaire montrant les cales d'encliquetage en cours de déverrouillage ;
- la figure 6 est une vue en élévation de la partie terminale d'une variante de la colonne de direction, avec un arrachement partiel montrant la tige filetée dont est muni l'embout d'encliquetage pour coopérer avec l'alésage taraudé du reste de la colonne de direction, qui est de type conventionnel ;
- la figure 7 est une vue similaire pour une variante dans laquelle le reste de la colonne de direction est du type conventionnel à tige filetée plutôt qu'à trou taraudé ;
- les figures 8 à 11 sont des vues similaires aux figures 1 à 4, respectivement, pour une variante dans laquelle l'embout d'encliquetage et la surface d'arrêt de la colonne de direction sont en tronc de pyramide plutôt qu'en tronc de cône ;
- la figure 12 est une vue similaire à la figure 8, montrant une variante des moyens de déverrouillage des cales d'encliquetage et montrant l'outil correspondant ;
- la figure 13 est une vue similaire à la figure 12, mais avec l'outil en place sur le levier destiné à le recevoir, dans la position de déverrouillage plutôt que dans la position de verrouillage ;
- la figure 14 est la vue partielle en coupe repérée par XIV-XIV sur la figure 13 ;
- la figure 15 est une vue en perspective d'une autre variante de la colonne de direction et du moyeu du volant, montrés dans une position où le moyeu est aligné avec la colonne et disposé à proximité de celle-ci ;
- la figure 16 est une vue en élévation-coupe montrant ce moyeu en position de fixation sur cette colonne ;
- la figure 17 est une vue en perspective montrant ce moyeu et cette colonne dans cette même position, le chapeau de fermeture du moyeu n'étant pas représenté ; et
- la figure 18 est une vue similaire, mais en position de déverrouillage.

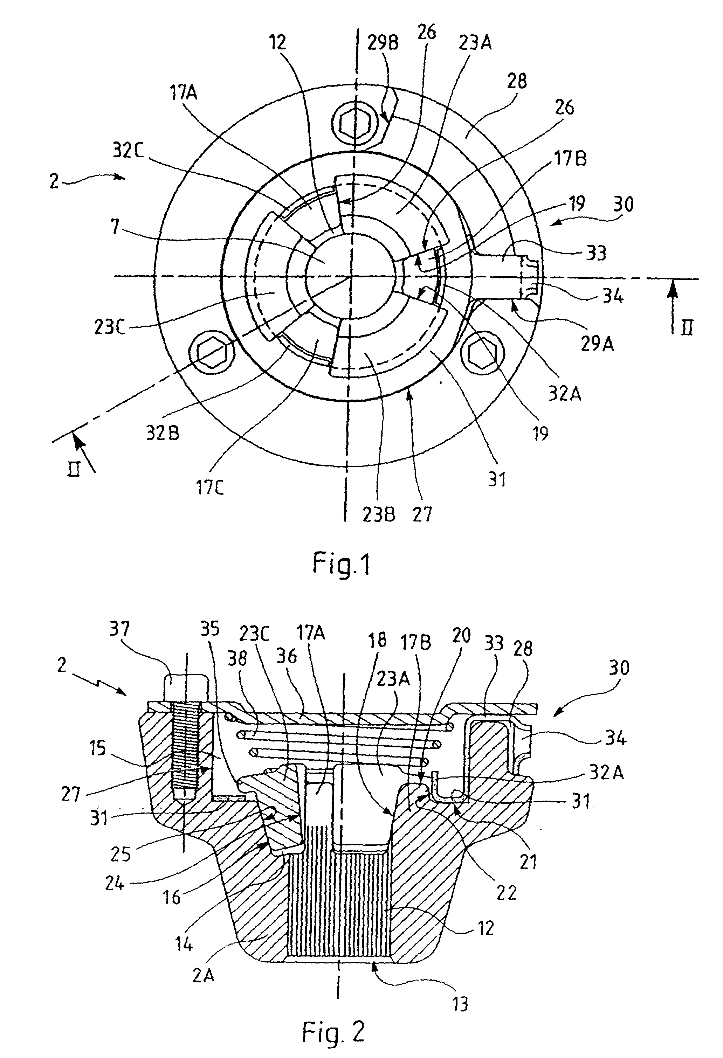

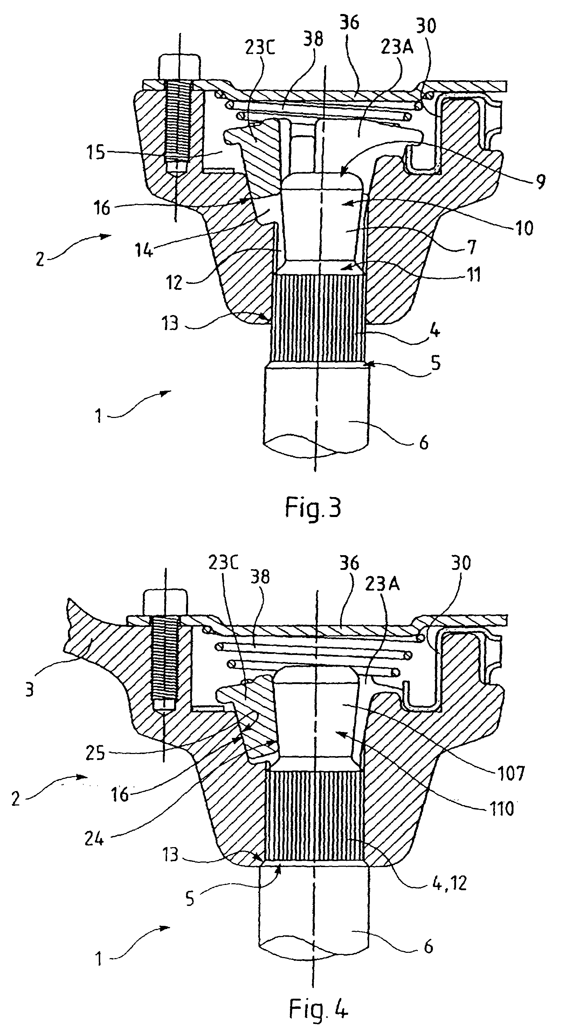

Le système de direction illustré sur les figures 1 à 4 comporte une colonne de direction dont la partie terminale 1 est montrée en détail sur les figures 3 et 4, et comporte un volant de direction dont on a essentiellement représenté le moyeu 2, une branche 3 de ce volant étant illustrée partiellement sur la figure 4.

La partie terminale 1 de la colonne de direction comporte classiquement une portion 4 garnie de cannelures orientées axialement à une extrémité de laquelle se trouve une surface d'arrêt 5 formée ici par un chanfrein qui relie la portion cannelée 4 à une portion lisse 6 de plus grand diamètre.

La partie terminale 1 comporte, de l'autre côté de la portion cannelée 4, un embout d'encliquetage 7. Cet embout présente une surface d'extrémité 9 dont le diamètre externe est inférieur à celui de la portion 4, le centre de la surface 9 étant plat et ses bords étant arrondis. La surface 9 se raccorde à une surface latérale 10 qui est en retrait par rapport à la surface 9.

Plus précisément, la surface 10 est tronconique et elle se raccorde par son grand diamètre à la surface d'extrémité 9. A l'opposé de celle-ci, la surface 10 se raccorde par son petit diamètre à une surface tronconique 11 formée par un chanfrein reliant l'embout d'encliquetage 7 et la portion cannelée 4.

Le moyeu 2 comporte un corps 2A en métal moulé et usiné. Ce corps présente un alésage 12 garni de cannelures à une extrémité duquel se trouve une surface de butée 13.

Le diamètre de l'alésage 12 et la conformation de ses cannelures correspondent respectivement au diamètre et à la conformation des cannelures de la portion 4 de la partie terminale 1 afin que l'alésage 12 puisse s'engager par coulissement sur la portion 4, ainsi que montré sur la figure 3. La coopération entre les cannelures de la portion 4 et de l'alésage 12 permet d'immobiliser en rotation le volant par rapport à la colonne de direction.

La surface de butée 13 a la même conformation que la surface d'arrêt 5 de la partie terminale 1, et sert à arrêter le mouvement d'enfoncement du moyeu 2 vis-à-vis de la partie terminale 1 suivant la direction axiale, lorsque les surfaces 13 et 5 viennent porter l'une sur l'autre, ainsi que montré sur la figure 4.

Ainsi qu'on le voit plus particulièrement sur la figure 3, à l'opposé de la surface de butée 13, l'alésage 12 débouche dans un logement coaxial à cet alésage, en forme de gradin, l'alésage 12 débouchant plus précisément dans un espace 14 ayant la forme générale d'une cuvette à bord évasé, l'espace 14 débouchant lui-même dans un espace 15 ayant la forme générale d'une cuvette à bord droit.

Le bord évasé de l'espace 14 est formé par une surface tronconique 16 dont le grand diamètre est du côté de l'espace 15 et dont le petit diamètre du côté de l'alésage 12.

Trois redents 17A, 17B et 17C faisant également partie du corps 2A sont disposés à intervalle régulier essentiellement dans l'espace 14.

Ces trois redents sont identiques, ils présentent chacun une surface interne 18 (figure 2) se raccordant à la paroi de l'alésage 12 et s'évasant vers l'espace 15, deux parois latérales 19 (figure 1) tournées vers l'espace 14 et globalement orientées chacune suivant un plan radial, une surface supérieure 20 (figure 2) plate se trouvant au-dessus de la surface de fond 21 de l'espace 15, et une surface 22 qui relie les surfaces 20 et 21.

Les surfaces 18 et 22 sont incurvées de sorte que les redents 17A, 17B et 17C ont une section en plan qui a la forme d'un tronc de secteur angulaire. Les surfaces latérales 19 sont légèrement inclinées par rapport à la direction axiale, les deux surfaces latérales d'un même secteur s'écartant dans le sens allant vers la surface de butée 13.

Dans chaque intervalle entre deux redents est disposée une cale d'encliquetage dont la section en plan a globalement une forme en tronc de secteur angulaire de plus grand angle au sommet que les redents 17A, 17B et 17C.

Plus précisément, une cale 23A est disposée entre les redents 17A et 17B, une cale 23B entre les redents 17B et 17C et une cale 23C entre les redents 17C et 17A.

Chacune des cales 23A à 23C présente une surface interne 24 (figure 2) de même forme que la surface latérale 10 de l'embout 7, une surface externe 25 de même forme que la surface 16 de l'espace 14, et deux parois latérales 26 (figure 1) de même forme que les parois latérales 19 des redents 17A, 17B et 17C.

L'écart entre les parois 24 et 25 est tel que quand la partie terminale 1 est engagée dans le moyeu 2 avec la surface de butée 13 qui porte sur la surface d'arrêt 5, chaque cale a sa surface 24 qui est en contact intime avec la surface latérale 10 de l'embout 7 et sa surface 25 qui est en contact intime avec la surface 16 du corps 2A, ainsi que montré sur la figure 4, l'écartement angulaire entre les parois latérales 26 étant tel que les parois latérales 26 portent intimement sur les parois 19 des redents entre lesquels la cale est disposée alors que cette cale est à une hauteur telle que le fond de la cale ne rencontre le fond de l'espace 14, ainsi que montré sur la figure 2.

La surface de fond 21 de l'espace 15 est plate et sa surface latérale 27 est cylindrique.

Un évidement 28 à section en L retourné est ménagé extérieurement sur environ 90° en haut de la partie du corps 2A appartenant au moyeu, cet évidement étant limité latéralement par des parois d'extrémité 29A et 29B (figure 1).

Une bague de déverrouillage 30 est mise en place dans l'espace 15 et dans l'évidement 28.

Cette bague comporte un anneau plat 31 disposé contre la paroi de fond 21 de l'espace 15, trois pattes de levage 32A, 32B et 32C disposées chacune du côté interne de la bague 31 et ayant une surface supérieure inclinée de sorte que la hauteur de chaque patte 32A à 32C augmente lorsqu'on se déplace le long de cette patte dans le sens des aiguilles d'une montre (pattes vues comme sur la figure 1), et un levier de manoeuvre 33 en forme de U renversé, se raccordant à la bague 31 du côté externe, la jambe interne du levier 33 étant disposée contre la paroi 27 et le reste de ce levier étant disposé dans l'évidement 28, une empreinte 34 étant ménagée dans la jambe externe pour un outil de manoeuvre.

Lorsque le levier 33 est contre la paroi d'extrémité 29A, ainsi que montré sur la figure 1, chacune des pattes 32A à 32C se trouve en regard de la surface externe 22 d'un redent 17A à 17C respectif.

Chacune des cales 23A à 23C présente une aile arrière 35 en saillie par rapport à la surface 25, chacune des pattes 32A à 32C pouvant venir sous l'aile 35 d'une cale respective, afin de la soulever lorsque le levier 33 est entraîné vers la surface d'extrémité 29B, afin de déverrouiller le volant, ainsi qu'on l'expliquera ultérieurement.

L'espace 15 est fermé par un chapeau 36 fixé sur le corps 2A par des vis 37, un ressort de compression hélicoïdal 38 étant disposé entre les cales 23A à 23C et le chapeau 36, des bossages respectifs étant prévus sur le chapeau 36 et sur les cales pour maintenir le ressort 38 centré.

On va maintenant expliquer comment se déroulent les opérations de montage et de démontage du volant.

L'alésage 12 du moyeu 2 est engagé sur la partie terminale 1 de la colonne de direction par un mouvement d'enfoncement au cours duquel la surface d'extrémité 9 de l'embout 7 finit par rencontrer les cales 23A à 23C, celles-ci sont alors repoussées par l'embout 7 à l'encontre du ressort 38 tout en glissant par leurs surfaces 25 sur la surface 16 de sorte que les cales s'écartent jusqu'à une position, montrée sur la figure 3, où l'embout 7 peut dépasser les cales 23A à 23C, qui sont alors repoussées par le ressort 38, et lorsque le moyeu est complètement enfoncé sur la partie terminale 1, c'est-à-dire lorsque la surface de butée 13 vient porter contre la surface d'arrêt 5, les cales 23A à 23C sont chacune insérées entre les surfaces 10 et 16, sur lesquelles elles portent intimement respectivement par leurs surfaces 24 et par leurs surfaces 25.

On observera que du fait de l'inclinaison des surfaces 10 et 16, tout mouvement orienté axialement qui tend à extraire le volant de la colonne, exerce sur les cales 23A à 23C par l'intermédiaire de la surface 10 ou de la surface 16, un effort dirigé vers l'autre surface, de sorte que ces efforts ne peuvent pas entraîner les cales, la colonne et le volant étant ainsi verrouillés.

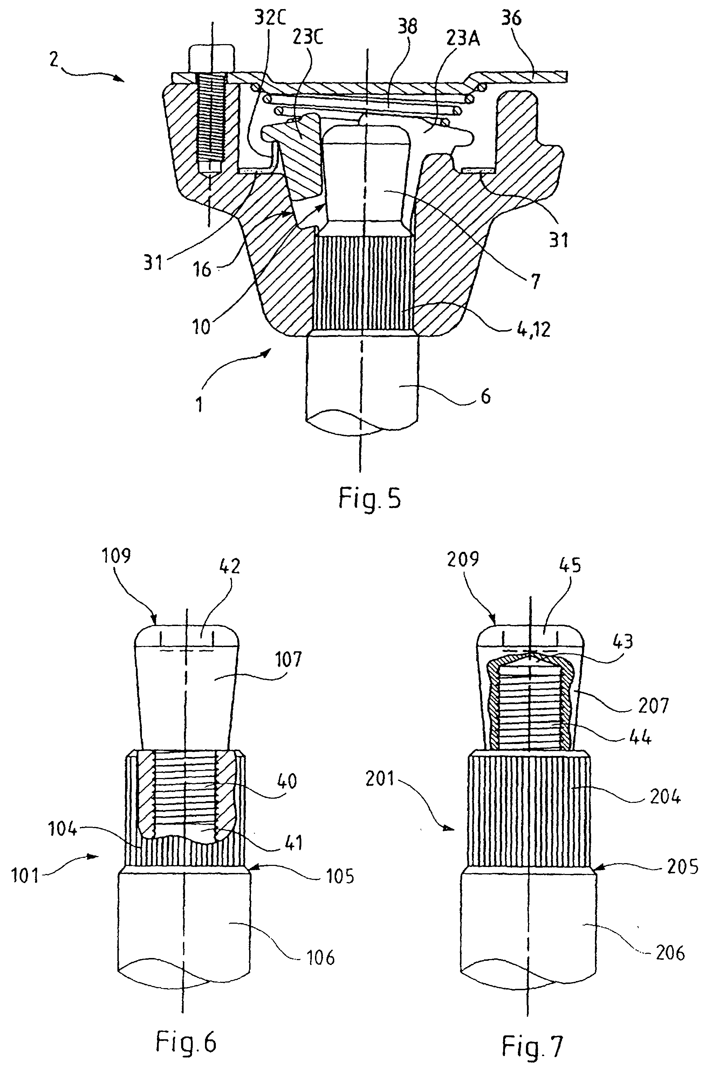

Pour procéder au démontage du volant, il suffit d'introduire un outil tel qu'une petite tige ronde dans l'empreinte 34 et d'entraîner le levier 33 vers la surface 29B, les pattes 32A à 32C passent progressivement sous l'aile 35 des cales 23A à 23C, respectivement, en les soulevant, ainsi que montré sur la figure 5, et lorsque le levier 33 arrive en butée sur la surface 29B, les cales sont suffisamment soulevées pour que le volant puisse être extrait de la partie terminale .

On observera que l'inclinaison par rapport à la direction axiale de la surface 10 est plus petite que l'inclinaison de la surface 16, cette différence d'inclinaison faisant qu'au démontage, il se crée très rapidement un espace entre les cales et l'embout 7, ce qui évite à avoir à vaincre d'importants efforts de frottement pour lever les cales.

Afin d'assurer que la bague 30 est spontanément dans la position où le levier 33 est contre la surface d'extrémité 29A (position de verrouillage du volant), l'une des extrémités du ressort 38 est accrochée au chapeau 36 et l'autre extrémité à la bague 30, le ressort 38 procurant ainsi également l'effort de rappel de la bague 30.

Dans la variante montrée sur les figures 6 et 7, la partie terminale de la colonne de direction n'est pas monobloc comme la partie 1, mais a été obtenue en complétant une partie terminale conventionnelle de colonne de direction et par un embout d'encliquetage rapporté par vissage sur l'élément normalement prévu pour recevoir la vis ou l'écrou de verrouillage du volant.

D'une façon générale, on a utilisé les mêmes références que pour la partie terminale 1, mais additionnée du chiffre 100 pour la variante de la figure 6 et du chiffre 200 pour celle de la figure 7.

La partie terminale 101 de la colonne de direction montrée sur la figure 6 comporte un embout d'encliquetage 107 muni d'une tige filetée 40 grâce à laquelle cet embout est fixé sur le reste de la partie terminale 101, qui est du type classique comportant un trou taraudé 41 normalement prévu pour la vis de fixation du volant, mais servant ici au montage de l'embout 107.

Un empreinte 42, ici hexagonale, est ménagée en creux dans la surface d'extrémité 109 pour permettre de bloquer l'embout 107 sur le reste de la partie terminale 101 grâce à une clé appropriée.

La partie terminale 201 de la colonne de direction montrée sur la figure 7 comporte un embout 207 présentant un alésage taraudé 43 grâce auquel cet embout est monté sur le reste de la partie terminale 201 qui est munie d'une tige filetée 44 servant normalement à l'écrou de verrouillage du volant mais qui sert ici à la fixation de l'embout 207, celui-ci étant muni d'une empreinte 45 similaire à l'empreinte 42 pour permettre son blocage.

Un moyen anti-dévissage est prévu par sécurité, ici une rondelle adéquate non représentée prévue dans chacune des parties terminales 101 et 201 entre l'embout 107 ou 207 et le reste de cette partie terminale.

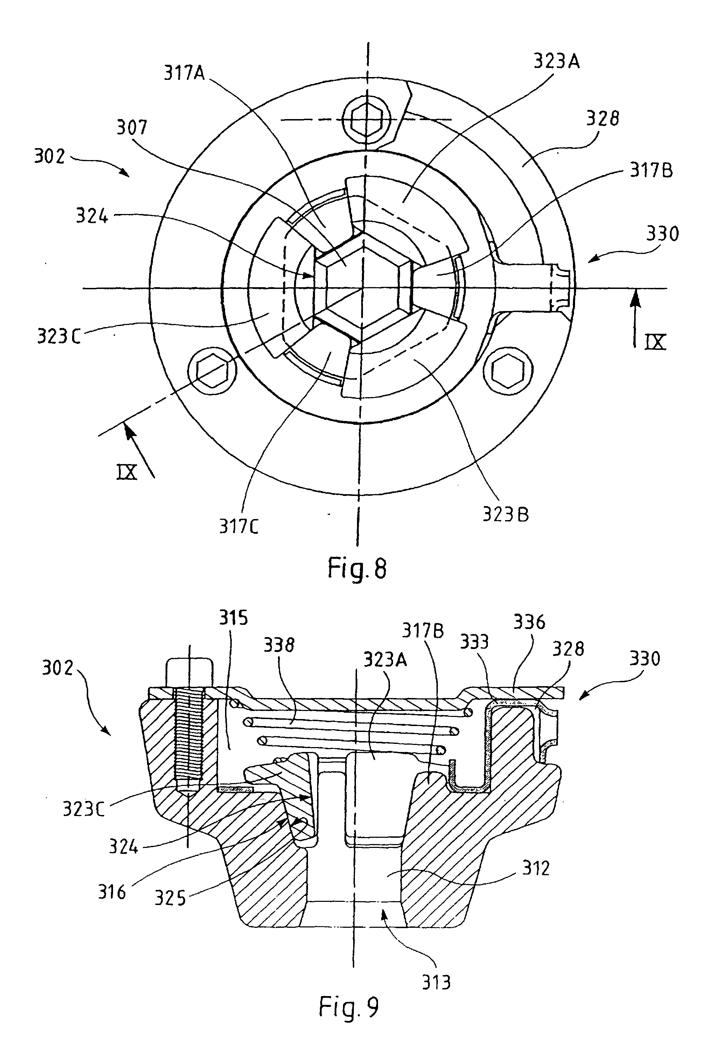

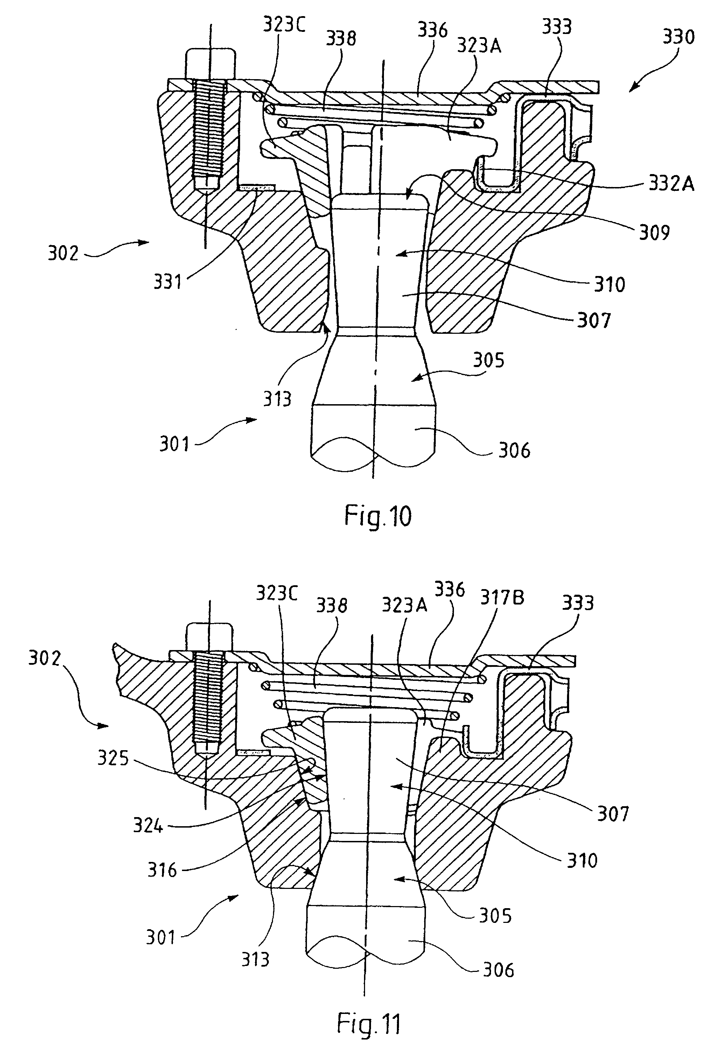

Dans la variante montrée sur les figures 8 à 11, la partie terminale de la colonne de direction est dépourvue de cannelures, la surface latérale de l'embout d'encliquetage n'est pas en forme de tronc de cône mais en forme de tronc de pyramide et il en va de même pour la surface d'arrêt de cette partie terminale.

D'une façon générale, on a utilisé les mêmes références numériques que pour le mode de réalisation des figures 1 à 4, mais additionnées du chiffre 300.

Comme on le voit plus particulièrement sur les figures 8 et 9, le moyeu 302 est similaire au moyeu 2, si ce n'est que l'alésage 312 est lisse au lieu de présenter des cannelures, que la surface de butée 313 est en forme de tronc de pyramide au lieu d'être en forme de tronc de cône, et que la surface interne 324 des cales 323A à 323C est plate au lieu d'être incurvée.

Ainsi qu'expliqué ci-dessus, la surface d'arrêt 305 de la partie terminale 301 est en forme de tronc de pyramide, ici à base hexagonale régulière, et de même la surface latérale 310 de l'embout d'encliquetage 307 est en forme de tronc de pyramide à base hexagonale, les pans des surfaces 305 et 310 étant mutuellement en correspondance.

Dans ce mode de réalisation, l'immobilisation en rotation entre le moyeu 302 et la partie terminale 301 n'est pas obtenu grâce à des cannelures, mais grâce à la coopération de la surface d'arrêt 305 et de la surface de butée 313 et grâce à la coopération de la surface 310 avec les cales 323A à 323C.

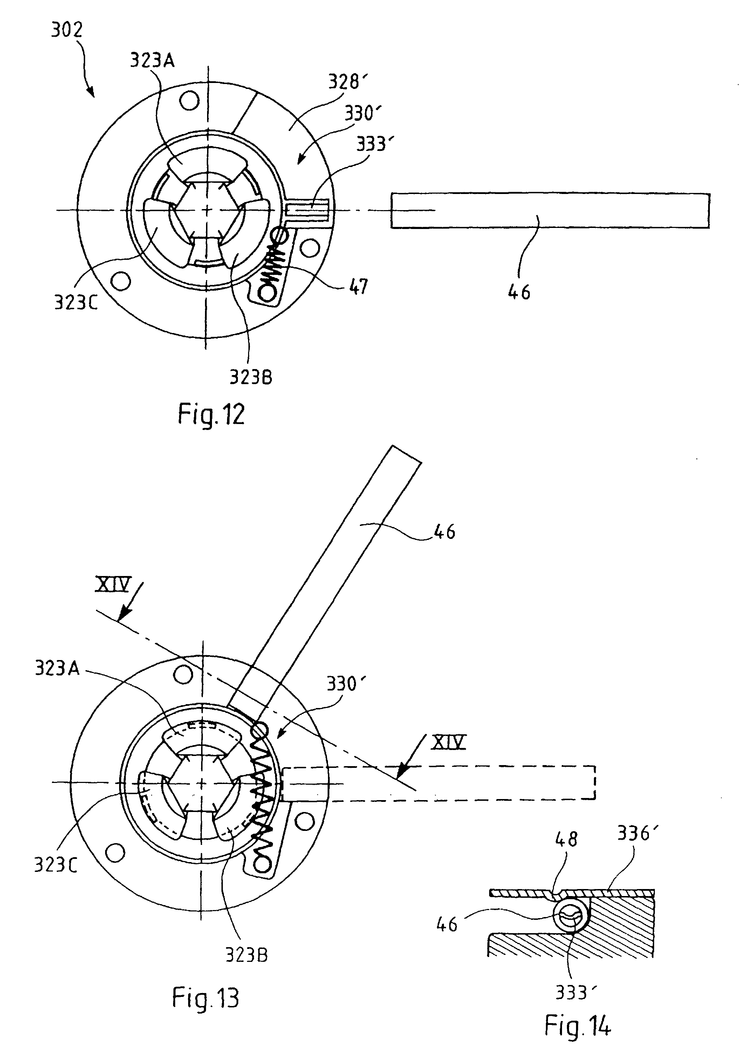

Dans la variante montrée sur les figures 12 à 14, l'évidement 328 est remplacé par un évidement 328' pratiqué dans la totalité de la paroi limitant latéralement l'espace 315 et le levier 333 est remplacé par un levier 333' droit prévu pour coopérer avec un outil 46 formé par un tube cylindrique, un ressort 47 dont une extrémité est fixée sur le corps du moyeu et l'autre sur la bague 330' étant prévu, au lieu du ressort 338, pour ramener la bague dans la position montrée sur la figure 12.

L'outil 46 est prévu pour s'engager autour du levier 333' dans cette position, ainsi que montré en trait interrompu sur la figure 13, et sert à faire pivoter la bague 330' jusqu'à la position de déverrouillage montrée sur la figure 13.

Ainsi qu'on le voit sur la figure 14, le chapeau 336 est remplacé par un chapeau 336' qui comporte un bossage formant un cran interne 48 permettant, grâce à l'élasticité de ce chapeau, qui est en tôle métallique, d'immobiliser l'outil 46 dans la position de déverrouillage montrée sur la figure 13, le cran étant toutefois d'une épaisseur suffisamment faible pour qu'en l'absence de l'outil 46 le levier 333 ne puisse être retenu par ce cran.

Grâce au blocage procuré par le cran 48, l'opérateur n'a pas besoin de maintenir le levier 46 pour extraire le volant de la colonne de direction, et il n'y a pas de risque que la bague 330' reste par inadvertance en position déverrouillée, l'extraction de l'outil 46 provoquant automatiquement, grâce au ressort 47, le retour dans la position de verrouillage montrée sur la figure 12.

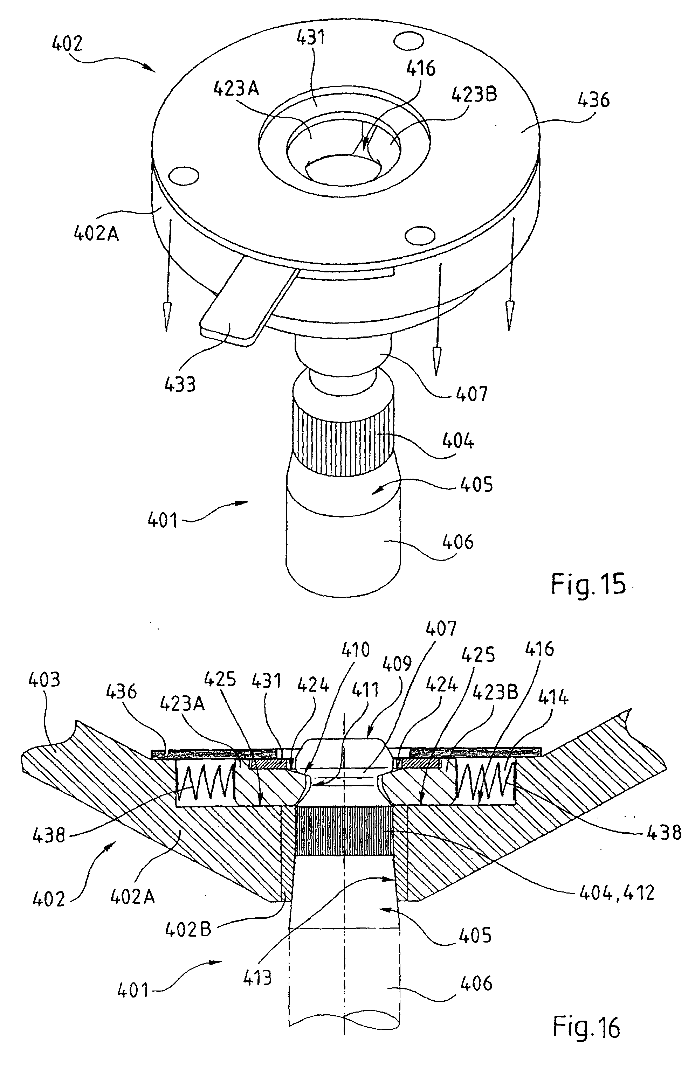

Dans la variante montrée sur les figures 15 à 18, la surface d'appui du moyeu n'est pas tronconique, mais plate et orientée transversalement à la direction axiale.

D'une façon générale, on a utilisé les mêmes références numériques que pour le mode de réalisation des figures 1 à 4, mais additionnées du chiffre 400.

Comme on le voit plus particulièrement sur les figures 15 et 16, la partie terminale 401 est similaire à la partie terminale 1, si ce n'est que la portion cannelée 404 est relativement courte et que la surface d'arrêt 405 est beaucoup plus longue que la surface d'arrêt 5, et si ce n'est, en ce qui concerne l'embout d'encliquetage 407, que les bords de la surface d'extrémité 409, situés autour de la surface plate centrale, ne sont pas arrondis comme pour la surface 9, mais comportent une portion tronconique et une portion cylindrique, et que la surface 411 qui raccorde la surface latérale en retrait 410 à la portion cannelée 4, n'est pas un simple chanfrein comme la surface 11, mais une surface présentant une portion cylindrique et une portion tronconique, l'angle au sommet de la surface tronconique 410 étant beaucoup plus faible que celui de la surface 10.

Tout comme le moyeu 2, le moyeu 402 comporte un corps 402A en métal moulé et usiné, mais ce corps est complété par une bague centrale 402B en métal plus dur, surmoulée par le corps 402A, et c'est cette bague qui présente l'alésage 412 garni de cannelures et la surface de butée 413, qui sont respectivement prévues pour coopérer avec la portion cannelée 404 et la surface d'arrêt 405 de la partie terminale 401 de la colonne.

En outre, le logement 414 dans lequel débouche l'alésage 412 à l'opposé de la surface de butée 413 a une conformation sensiblement différente de celle des espaces 14 et 15 du moyeu 2.

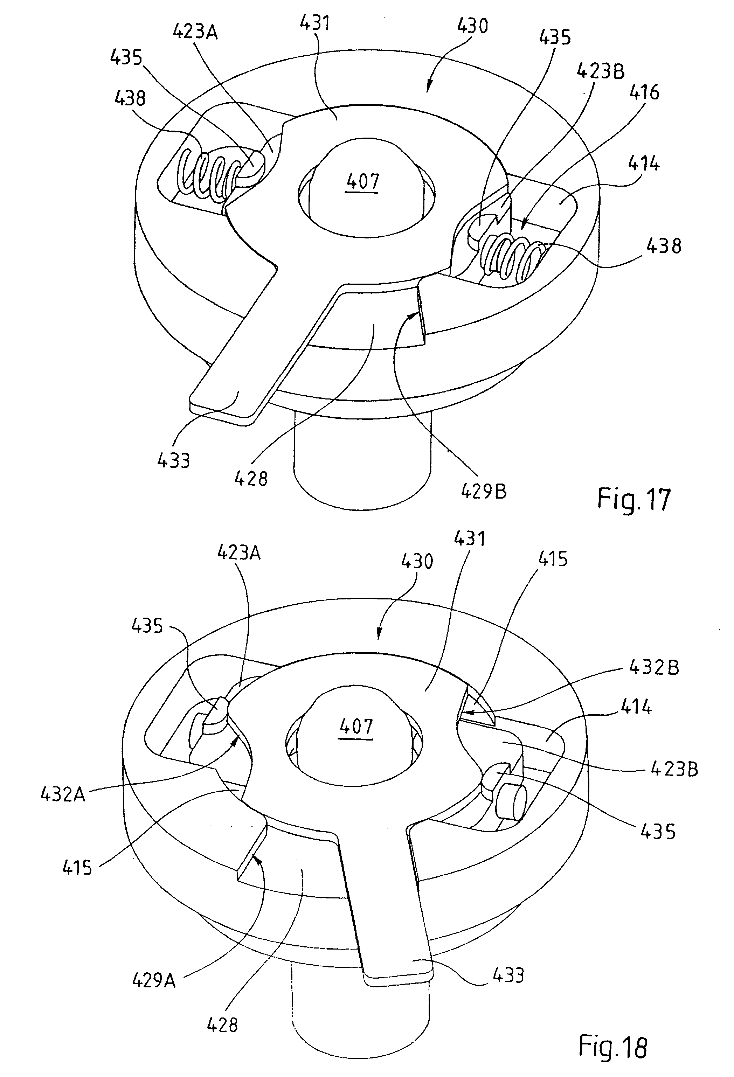

En effet, comme on le voit plus particulièrement sur les figures 17 et 18, l'alésage 412 débouche dans un espace 414 qui est de forme générale parallélépipédique, le fond 416 de cet espace, qui se raccorde directement à l'alésage 412, étant plat et orienté suivant un plan transversal à la direction axiale, les coins de la surface latérale étant arrondis, la longueur de l'espace 414 étant légèrement inférieure au diamètre du moyeu 2, sa largeur étant légèrement supérieure à celle de l'alésage 412, celui-ci débouchant au centre du logement 414.

De chaque côté de l'alésage 412, est disposée une cale de verrouillage, respectivement 423A et 423B, chacune de ces cales présentant une surface d'extrémité 424, de même forme que la surface latérale 410 de l'embout 407, et une surface de fond 425, de même forme que la surface de fond 416 du logement 414, les surfaces 424 et 425 étant ainsi respectivement tronconiques et plates.

La conformation des cales 423A et 423B, et notamment la disposition relative des surfaces 424 et 425, est telle que quand la partie terminale 401 est engagée dans le moyeu 402 avec la surface de butée 413 qui porte sur la surface d'arrêt 405, chaque cale a sa surface 424 qui est en contact intime avec la surface latérale 410 de l'embout 407 et sa surface 425 qui est en contact intime avec la surface 416 du corps 402A, 402B, ainsi que montré sur la figure 16.

Comme on le voit sur la figure 18, l'évidement pratiqué à partir de la face supérieure du moyeu 2 comporte non seulement le logement 414, mais aussi un logement 415 de forme générale circulaire disposé concentriquement, de sorte qu'il existe de part et d'autre du logement 414, une surface latérale orientée suivant une portion de cercle disposée concentriquement et une surface de fond plate parallèle à la surface 416, un évidement supplémentaire 428 étant ménagé entre le logement 415 et le bord latéral du moyeu 402, du côté que l'on voit en bas sur les figures 17 et 18, le fond du logement 415 et celui de l'évidement 428 étant dans le prolongement l'un de l'autre, l'évidement 428 étant limité latéralement par des surfaces d'arrêt respectives 429A et 429B orientées chacune suivant un plan radial.

Une bague de déverrouillage 430 est mise en place dans l'espace 415 et dans l'évidement 428, cette bague comportant un anneau plat 431 disposé contre la paroi de fond et contre la paroi latérale de l'espace 415 et un levier de manoeuvre 433, également plat et de même épaisseur que l'anneau 431, disposé dans l'évidement 428.

Le trou central de l'anneau plat 431 a un diamètre supérieur à celui de l'alésage 12, de sorte que l'embout terminal 407 peut passer au travers de ce trou.

La surface latérale de l'anneau 431 présente de part et d'autre du levier 433, ainsi qu'à l'opposé de celui-ci, une portion de forme générale circulaire de même diamètre que la surface latérale du logement 415, de sorte que quand ce logement et l'évidement reçoivent respectivement l'anneau 431 et le levier 433, la bague de déverrouillage 430 est guidée à rotation concentriquement au moyeu 402, et peut pivoter entre la position montrée sur la figure 17 où le levier 433 est contre la surface 429A, et la position où le levier 433 est contre la surface 429B, comme montré sur la figure 18.

La paroi latérale de l'anneau plat 431 présente en outre deux surfaces convexes opposées 432A et 432B (figure 18) qui servent à coopérer, comme on l'expliquera ci-après, avec les cales 423A et 423B, respectivement.

Le dimensionnement de ces cales, et notamment leur largeur et leur épaisseur, est tel qu'elles peuvent coulisser dans le logement 414, suivant une direction radiale, le guidage des cales s'effectuant grâce à la paroi de fond 416 et aux parois latérales du logement 414, ainsi que par le dessous de l'anneau plat 431, l'épaisseur de celui-ci et la hauteur de l'évidement 15 étant telles que lorsque le chapeau 436 est en place, la bague de déverrouillage 433 reste mobile entre les positions montrées respectivement sur les figures 17 et 18.

Pour chacune des cales 423A et 423B, est prévu un ressort de compression 438 (non représenté sur la figure 18) disposé entre un petit côté respectif du logement 414 et une des cales, de sorte que chaque cale est sollicitée vers le centre du moyeu, chaque cale étant munie d'un téton 435 en saillie par rapport à sa surface supérieure, et disposé du côté externe.

Lorsque le moyeu 402 ne coopère pas avec une colonne de direction, ainsi que montré sur la figure 15, les ressorts 438 sollicitent les cales respectives vers l'intérieur, de sorte que les tétons 435 rencontrent la surface 432A ou 432B, ce qui fait que la bague de déverrouillage 430 est entraînée dans la position montrée sur la figure 15 où le levier 433 est contre la surface d'arrêt 429A et les tétons 435 en butée respectivement contre la surface 432A et contre la surface 432B.

L'opération de montage du moyeu 402 sur l'élément terminal 401 s'effectue, de même que le montage du moyeu 2 sur l'élément terminal 1, en engageant le moyeu comme montré par des flèches sur la figure 15, dans un mouvement d'enfoncement au cours duquel la surface d'extrémité 409 de l'embout 407 fini par rencontrer les cales 423A et 423B, celles-ci sont alors repoussées par l'embout 407 à l'encontre des ressorts 38 respectifs tout en glissant par leur surface 425 sur la surface 416 de sorte que les cales s'écartent jusqu'à une position où l'embout 407 peut dépasser les cales 423A et 423B, qui sont alors repoussées par leur ressort 38, et lorsque le moyeu est complètement enfoncé sur la partie terminale 401, c'est-à-dire lorsque la surface de butée 413 vient porter contre la surface d'arrêt 405, les cales 423A et 423B sont chacune insérées entre les surfaces 416 et 410, sur lesquelles elles portent respectivement par leur surface 424 et par leur surface 425.

On notera que du fait de l'inclinaison des surfaces 410 et 424 par rapport aux surfaces 416 et 425, qu'au cas où il existe un effort d'extraction du volant, la composante dirigée radialement des forces s'exerçant sur les cales 423A et 423B reste suffisamment faible pour que les cales ne soient pas entraînées vers l'extérieur, du fait du frottement entre les surfaces 416 et 425 et de l'effet des ressorts 438.

Pour procéder au démontage du volant, on manoeuvre le levier 433 pour l'amener en butée contre la surface 429B, la coopération entre les tétons 435 et l'une des surfaces 432A ou 432B ayant pour effet d'entraîner les cales vers l'extérieur, jusqu'à une position où elles seront suffisamment écartées pour que le moyeu 402 puisse être extrait de l'élément terminal 401, ainsi que montré sur la figure 18.

On observera qu'entre la position de verrouillage (figure 17) et la position de déverrouillage (figure 18), la bague 430 ne doit tourner que d'un angle relativement petit.

Dans des variantes non représentées, l'embout 407 est vissé sur le reste de la colonne de direction, plutôt que d'être directement solidaire de celle-ci, comme dans les modes de réalisation des figures 6 et 7 ; les formes tronconiques de l'embout terminal 401 et du moyeu 402 sont remplacées par des formes prismatiques, comme dans le mode de réalisation des figures 8 à 11 ; le levier 433 est remplacé par une empreinte pour un outil de déverrouillage, comme dans les autres modes de réalisation, notamment celui montré sur les figures 12 à 14 ; et/ou le levier 430 et le couvercle 436 sont réalisées en une seule pièce.

De nombreuses variantes sont possibles en fonction des circonstances, et on rappelle à cet égard que l'invention ne se limite pas aux exemples décrits et représentés.

## Revendications

1. Volant de direction pour véhicule, comportant un moyen d'encliquetage (23A, 23B, 23C ; 323A, 323B, 323C ; 423A, 423B), et un moyen élastique (38 ; 338 ; 438) sollicitant ledit moyen d'encliquetage, **caractérisé en ce qu'**il comporte aussi une bague de déverrouillage, ladite bague de déverrouillage (30 ; 330 ; 330' ; 430), admettant
- une position de déverrouillage dans laquelle elle entraîne suffisamment ledit moyen d'encliquetage (23A, 23B, 23C ; 323A, 323B, 323C ; 423A, 423B) à l'encontre dudit moyen élastique (38 ; 338 . 438) pour libérer un espace au moins égal à l'encombrement radial maximum d'un embout d'encliquetage (7 ; 107 ; 207 ; 307 ; 407) d'une colonne de direction avec laquelle ledit volant est adapté à coopérer ; et
- une position de verrouillage dans laquelle ladite bague n'agit pas sur ledit moyen d'encliquetage.

2. Volant selon la revendication 1, **caractérisé en ce qu'**un moyen de rappel élastique (38 ; 338 ; 47 ; 438) sollicite ladite bague de déverrouillage (30 ; 330 ; 330' ; 430) vers ladite position de verrouillage.

3. Volant selon l'une quelconque des revendications 1 ou 2, **caractérisé en ce que** ladite bague de déverrouillage (30 ; 330 ; 330' ; 430) comporte un levier de manoeuvre (33 ; 333 ; 333' ; 433) mobile dans un évidement latéral (28 ; 328 ; 328' ; 428) du moyeu dudit volant.

4. Volant selon la revendication 3, **caractérisé en ce que** ledit levier (33 ; 333) comporte un orifice (34) de réception d'un outil de manoeuvre.

5. Volant selon la revendication 3, **caractérisé en ce que** ledit levier (333') est adapté à être inséré dans un creux d'extrémité d'un outil de manoeuvre (46).

6. Volant selon la revendication 5, **caractérisé en ce qu'**il comporte un moyen de blocage (336', 48) pour bloquer dans ladite position de déverrouillage ledit outil (46) engagé sur ledit levier (333'), ledit moyen de blocage étant adapté à ne pas entrer en contact avec ledit levier (333'), un moyen de rappel élastique (47) étant prévu pour ramener ladite bague de déverrouillage dans ladite position de verrouillage.

7. Volant selon la revendication 6, **caractérisé en ce que** lesdits moyens de blocage comportent un bossage (48) ménagé sur un chapeau (336') dudit moyeu.

## Claims

1. Steering wheel for a vehicle, including a clipping means (23A, 23B, 23C; 323A, 323B, 323C; 423A, 423B), and an elastic means (38; 338; 438) spring-loading the said clipping means, **characterised in that** it also includes an unlocking ring, the said unlocking ring (30; 330; 330'; 430) allowing for:
- an unlocking position in which it drives the said clipping means (23A, 23B, 23C; 323A, 323B, 323C; 423A, 423B), counter to the said elastic means (38; 338, 438), sufficiently to free a space at least equal to the maximum radial bulk of a clipping end (7; 107; 207; 307; 407) of a steering column with which the said wheel is able to interact; and
- a locking position in which the said ring does not act on the said clipping means.

2. Steering wheel according to Claim 1, **characterised in that** an elastic-return means (38; 338; 47; 438) spring-loads the said unlocking ring (30; 330; 330'; 430) towards the said locking position.

3. Steering wheel according to any one of Claims 1 or 2, **characterised in that** the said unlocking ring (30; 330; 330'; 430) includes a setting-up lever (33; 333; 333'; 433) movable in a lateral recess (28; 328; 328'; 428) of the hub of the said steering wheel.

4. Steering wheel according to Claim 3, **characterised in that** the said lever (33; 333) includes an orifice (34) for receiving a setting-up tool.

5. Steering wheel according to Claim 3, **characterised in that** the said lever (333') is suitable for being inserted into a hollow end of a setting-up tool (46).

6. Steering wheel according to Claim 5, **characterised in that** it includes a locking means (336', 48) for locking the said tool (46) in the said locking position when the tool is engaged on the said lever (333'), the said locking means being configured so as not to come into contact with the said lever (333'), an elastic-return means (47) being provided for bringing the said unlocking ring into the said locking position.

7. Steering wheel according to Claim 6, **characterised in that** the said locking means include a boss (48) formed on a cap (336') of the said hub.

## Patentansprüche

1. Lenkrad für ein Fahrzeug, mit einem Sperrmittel (23A, 23B, 23C; 323A, 323B, 323C; 423A, 423B) und einem das Sperrmittel vorspannenden federnden Mittel (38; 338; 438), **dadurch gekennzeichnet, dass** es ferner einen Freigabering aufweist, wobei der Freigabering (30; 330; 330'; 430):
- eine Freigabestellung, in der er das Sperrmittel (23A, 23B, 23C; 323A, 323B, 323C; 423A, 423B) ausreichend gegen das federnde Mittel (38; 338; 438) bewegt, um einen Abstand, der zumindest einem maximalen radialen Raumbedarf eines Sperransatzes (7; 107; 207; 307; 407) einer Lenksäule entspricht, mit der das Lenkrad zusammenwirken soll, freizugeben; und
- eine Verriegelungsstellung zuläßt, in der der Freigabering nicht auf das federnde Mittel einwirkt.

2. Lenkrad nach Anspruch 1, **dadurch gekennzeichnet, dass** ein federndes Rückstellmittel (38; 338; 47; 438) den Freigabering (30; 330; 330'; 430) in die Verriegelungsstellung vorspannt.

3. Lenkrad nach einem der Ansprüche 1 oder 2, **dadurch gekennzeichnet, dass** der Freigabering (30, 330; 330'; 430) einen in einer seitlichen Aussparung (28; 328; 328'; 428) der Nabe des Lenkrades beweglichen Stellhebel (33; 333; 333'; 433) umfaßt

4. Lenkrad nach Anspruch 3, **dadurch gekennzeichnet, dass** der Hebel (33, 333) eine Öffnung (34) zur Aufnahme eines Stellwerkzeuges umfaßt.

5. Lenkrad nach Anspruch 3, **dadurch gekennzeichnet, dass** der Hebel (333') zum Einführen in eine Aufnahme am Ende eines Stellwerkzeuges (46) ausgelegt ist.

6. Lenkrad nach Anspruch 5, **dadurch gekennzeichnet, dass** es ein Feststellmittel (336', 48) zum Feststellen des mit dem Hebel (333') in Eingriff stehenden Werkzeuges (46) in der Freigabestellung umfaßt, wobei das Feststellmittel dazu ausgelegt ist, nicht mit dem Hebel (333') in Berührung zu kommen, und dass ein federndes Rückstellmittel (47) vorgesehen ist, um den Freigabering in die Verriegelungsstellung zurückzubringen.

7. Lenkrad nach Anspruch 6, **dadurch gekennzeichnet, dass** die Feststellmittel einen an einer Abdeckung (336') der Nabe vorgesehenen Vorsprung (48) aufweisen.
